# FASCICULE DE BREVET EUROPEEN

(11) **EP 1 979 362 B1**
(45) Date de publication et mention de la délivrance du brevet: **15.12.2010**
(21) Numéro de dépôt: 07704304.0
(22) Date de dépôt: 01.02.2007
(51) Int. Cl.: C07F 7/18, C07F 7/08, C07F 7/12, G01N 33/50

(54) **NOUVEAUX COMPOSÉS SILANES ET LEUR UTILISATION POUR FONCTIONNALISER DES SUPPORTS SOLIDES ET IMMOBILISER SUR CES SUPPORTS DES MOLÉCULES BIOLOGIQUES**
NEUE SILANVERBINDUNGEN UND DEREN VERWENDUNG ZUR FUNKTIONALISIERUNG FESTER MEDIEN UND ZUR IMMOBILISIERUNG BIOLOGISCHER MOLEKÜLE AUF DIESEN MEDIEN
NOVEL SILANE COMPOUNDS AND USE THEREOF IN ORDER TO FUNCTIONALISE SOLID MEDIA AND IMMOBILISE BIOLOGICAL MOLECULES ON SAID MEDIA

(30) Priorité: 01.02.2006 FR 0650360
(43) Date de publication de la demande: 15.10.2008
(73) Titulaire: Commissariat à l'Énergie Atomique et aux Énergies Alternatives, 75015 Paris (FR); Université de Montpellier II, 34095 Montpellier Cedex 5 (FR); Centre National de la Recherche Scientifique, 75794 Paris Cedex (FR)
(72) Inventeur: MARTIN, Franck, F-34070 Montpellier (FR); GRANIER, Michel, F-34820 Teyran (FR); LANNEAU, Gérard, F-34820 Teyran (FR)
(74) Mandataire: Ilgart, Jean-Christophe
(86) Numéro de dépôt international: PCT/EP2007/050983
(87) Numéro de publication internationale: WO 2007/088186

(56) Documents cités:
- WO-A-02/051856

## Description

### DOMAINE TECHNIQUE

La présente invention a trait à de nouveaux composés silanes utilisables pour fonctionnaliser des supports solides, à des supports fonctionnalisés par lesdits composés silanes et à leurs utilisations pour l'immobilisation de molécules biologiques, telles que des acides nucléiques, des polypeptides, des lipides, des carbohydrates et des hormones.

Les supports porteurs de molécules biologiques immobilisées sont avantageusement utilisés pour la détection et la reconnaissance d'espèces biologiques, mais également d'autres applications, telles que la synthèse ou la modification chimique sur support.

En ce qui concerne la détection et la reconnaissance d'espèces biologiques, il est essentiel de disposer de supports solides fonctionnalisés présentant les caractéristiques suivantes :
- permettre l'immobilisation reproductible des molécules biologiques d'intérêt;
- permettre l'immobilisation des molécules biologiques d'intérêt de façon sensible, la sensibilité d'un support solide fonctionnalisé dépendant du taux d'immobilisation et de la méthode de détection d'un signal mais aussi du niveau du bruit de fond ;
- être réutilisables.

L'immobilisation de molécules biologiques d'intérêt sur des supports solides s'effectue généralement en deux étapes :
- une première étape de fonctionnalisation des supports qui consiste en une modification chimique de leur surface par greffage d'agents de couplage qui vont assurer la fixation des molécules biologiques sur le support ;
- une deuxième étape d'immobilisation consistant à établir une liaison covalente entre les molécules biologiques et les agents de couplage greffés sur le support.

Les agents de couplage se greffent à la surface des supports par réaction avec des fonctions -OH ou hydrure du support et des fonctions réactives de l'agent, pour former de fortes interactions ioniques ou covalentes entre l'agent de couplage et le support et s'organisent à la surface du support généralement sous forme d'une monocouche dense et organisée à la surface, par exemple, par formation de liaisons du type Van der Waals entre les molécules d'agents de couplage greffées.

Des agents de couplage pour fonctionnaliser des supports, en particulier des supports à base de silicium sont des organosilanes, comprenant au moins un groupe organique R apte à réagir avec une extrémité fonctionnelle des molécules à immobiliser et au moins un groupe X apte à réagir avec les fonctions -OH ou hydrure du support pour former une liaison iono-covalente voire covalente.

Une fois les agents de couplage greffés et éventuellement organisés sous forme d'une monocouche à la surface du support, les molécules biologiques peuvent être greffés ou adsorbés par réaction avec une fonction terminale de l'agent de couplage greffé. Une fonction terminale particulièrement attractive est la fonction hydroxyle, en particulier hydroxyle primaire, et ce pour les raisons suivantes :
- elle permet la formation d'une liaison covalente en réagissant avec un groupe approprié, par exemple un groupe phosphoramidite fixé sur la molécule biologique à immobiliser ;
- elle permet la formation de liaisons non covalentes du type « liaison hydrogène » au contact d'une fonction -NH₂, -OH, -SH située sur la molécules biologiques à immobiliser.

La synthèse d'agents de couplage silylés porteurs d'une fonction alcool n'est pas envisageable, sans passer par une protection de cette fonction du fait de sa très haute réactivité notamment avec les groupements chlorosilanes, alcoxysilanes et hydrogénosilanes, protection qui est supprimée avec greffage de l'agent sur le support.

Différentes techniques pour obtenir des agents de couplages silylés porteurs d'une fonction hydroxyle greffés à la surface d'un support ont été envisagés :
- le greffage sur un support de silice d'un agent silylé porteur d'une fonction ester suivi d'un réduction de ladite fonction ester en alcool selon le schéma suivant : 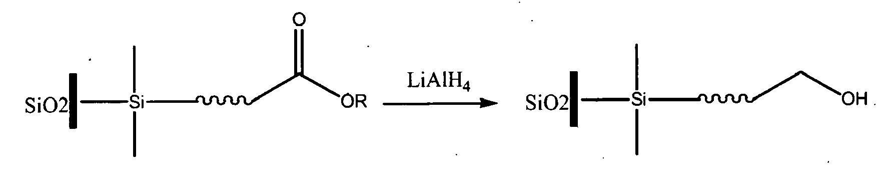
- le greffage sur un support de silice d'un agent silylé porteur d'une fonction vinylique suivi d'une oxydation de ladite fonction vinylique en alcool selon le schéma suivant : 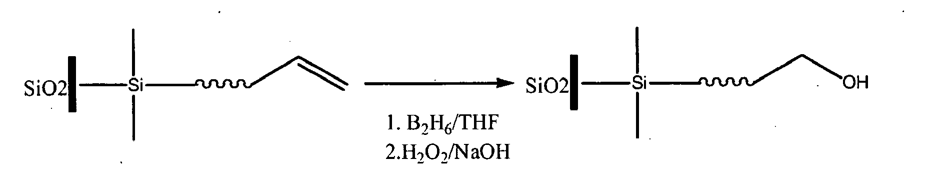
- le greffage sur un support de silice d'un agent silylé porteur d'une fonction carbonate suivi d'une transformation de la fonction carbonate en alcool par irradiation à une longueur d'onde donnée selon le schéma suivant : 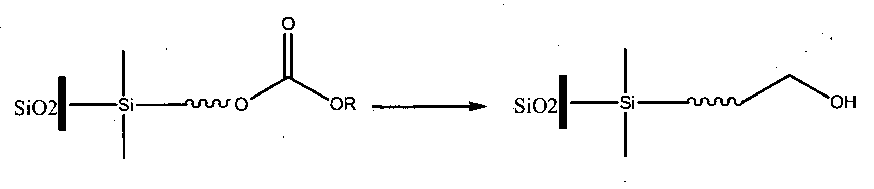
- le greffage sur un support de silice d'un agent silylé porteur d'une fonction éther photolabile suivi d'une transformation de la fonction éther en alcool par irradiation à une longueur d'onde donnée selon le schéma suivant :

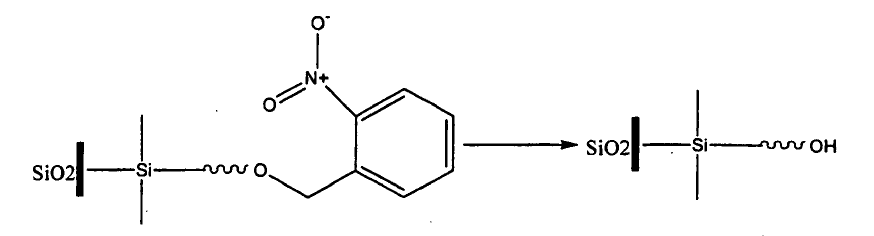

L'ensemble des conditions opératoires nécessaires à la libération de la fonction -OH des agents après greffage mentionné ci-dessus sont des conditions agressives qui nuisent à l'intégrité du support.

WO 02/051856 décrit un support solide constitué par un substrat comportant des sites destinés à l'immobilisation de sondes oligonueléotidiques ou de protéines ou de cellules biologiques munies de ligands, les sites étant pourvus d'espèces chimiques accrochées au substrat par une fonction chimique d'accrochage, caractérisé en ce que les espèces chimiques présentent un groupe iol lié au support par une chaîne alkyle, ce groupe diol étant destiné à être transformé en un groupe aldéhyde en vue de ladite immobilization.

Il existe donc un véritable besoin pour des agents de couplage du type silane qui sont aptes à se greffer à la surface d'un support minéral et apte à libérer une fonction -OH après greffage dans des conditions qui ne nuisent pas à la nature du support.

C'est sur la base de ce besoin que les inventeurs ont mis au point de nouveaux composés silanes qui présentent les avantages mentionnés ci-dessus.

### EXPOSÉ DE L'INVENTION

Ainsi, l'invention a trait, selon un premier objet, à un composé silane répondant à la formule (I) suivante :

A-E-X (I)

dans laquelle :
- X représente un groupe silylé apte à créer une liaison covalente après réaction avec les fonctions hydroxyle ou hydrure d'un support, lequel groupe X représente un groupe trihalogénosilane; un groupe trihydrogénosilane -SiH₃; un groupe trialcoxysilane -Si(OR)₃ avec R représentant un groupe alkyle saturé en C₁ à C₆, linéaire ou ramifié un groupe phényle; un groupe triaminoalcoxyamine -Si(NR¹R²)₃, avec les R¹ et R² représentant indépendamment un groupe alkyle saturé en C₁ à C₆, linéaire ou ramifié, un groupe phehyle, un groupe organométallique;
- E représente un groupe espaceur organique ;
- A représente un groupe apte à former une fonction -OH par hydrolyse acide, ladite fonction -OH après ladite hydrolyse étant liée de façon covalente à E,
ledit groupe A étant un groupe éther choisi parmi les groupes méthoxyméthyléther, t-butoxyméthyléther, 2-(triméthylsilyl)éthoxyméthyléther, tétrahydropyranyléther, 1-méthoxycyclohexyléther, 4-méthoxytétrahydropyranyléther, 4-méthoxytétrahydrothiopyranyléther, 4-méthoxytétrahydrothiopyranyléther S,S dioxyde, 1-[(2-chloro-4-méthyl)phényl]-4-méthoxypipéridin-4-yléther, 1-[(2-fluorophényl)phényl]-4-méthoxypipéridin-4-yléther, 1,4-dioxan-2-yléther, tétrahydrofuranyléther, 1-éthoxyéthyléther, 1-(2-chloroéthoxy)éthyléther, 1-méthyl-1-méthoxyéthyléther, 1-méthyl-1-benzyloéthyléther, t-butyléther, allyléther, p-méthoxybenzyléther, p-halogénobenzyléther, triphénylméthyléther, triisopropylsilyléther, diméthylisopropylsilyléther, diéthylisopropylsilyléther ou méthoxyméthylcarbonate.

La transformation envisageable du groupe A en fonction -OH par simple hydrolyse acide est particulièrement intéressante, en ce sens que l'hydrolyse acide n'interfère pas sur la qualité, l'accessibilité et la reproductibilité des surfaces des supports, sur lesquels sont destinés à être greffés les composés silanes de l'invention.

Selon l'invention, le groupe A est un groupe apte à former une fonction -OH par hydrolyse acide. En d'autres termes, le groupe A est un groupe protecteur d'une fonction -OH, lequel groupe s'hydrolyse en milieu acide pour libérer ladite fonction.

Ce groupe est un groupe éther susceptible de libérer une fonction -OH par hydrolyse acide.

Un tel groupe éther peut être avantageusement :
- un groupe méthoxyméthyléther de formule suivante : 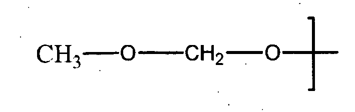
- un groupe t-butoxyméthyléther de formule suivante : 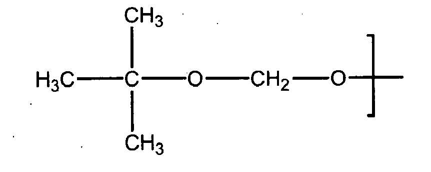
- un groupe 2-(triméthylsilyl)éthoxyméthyléther de formule suivante : 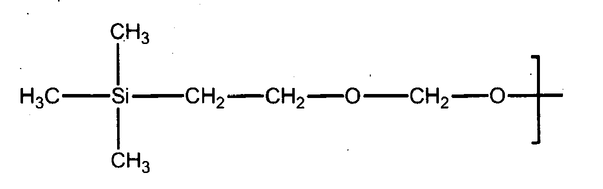
- un groupe tétrahydropyranyléther de formule suivante : 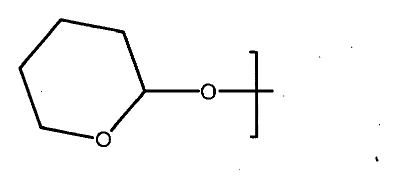
- un groupe 1-méthoxycyclohexyléther de formule suivante : 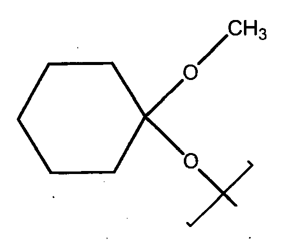
- un groupe 4-méthoxytétrahydropyranyléther de formule suivante : 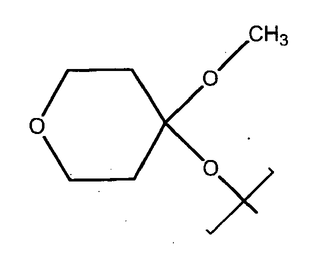 un groupe 4-méthoxytétrahydrothiopyranyléther de formule suivante : 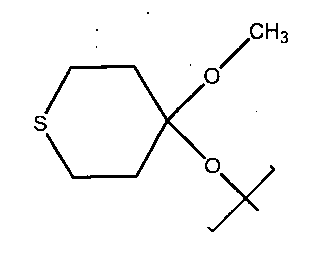
- un groupe 4-méthoxytétrahydrothiopyranyléther S,S-dioxyde de formule suivante : 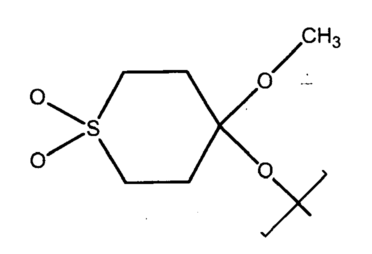
- un groupe 1-[(2-chloro-4-méthyl)phényl]-4-méthoxypipéridin-4-yléther de formule suivante : 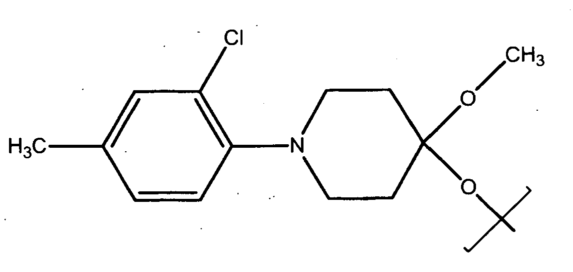
- un groupe 1-[(2-fluorophényl)phényl]-4-méthoxypipéridin-4-yléther de formule suivante : 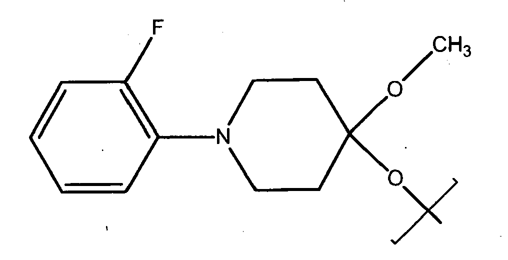
- un groupe 1,4-dioxan-2-yléther ;
- un groupe tétrahydrofuranyléther ;
- un groupe 1-éthoxyéthyléther de formule suivante : 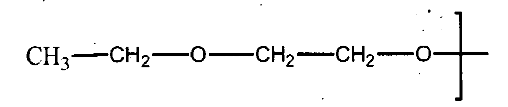
- un groupe 1-(2-chloroéthoxy)éthyléther de formule suivante : 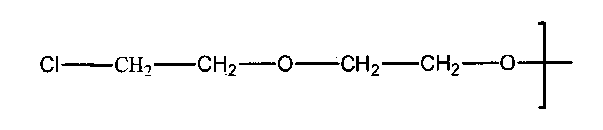
- un groupe 1-méthyl-1-méthoxyéthyléther de formule suivante : 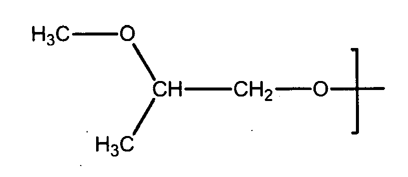
- un groupe 1-méthyl-1-benzyloéthyléther de formule suivante : 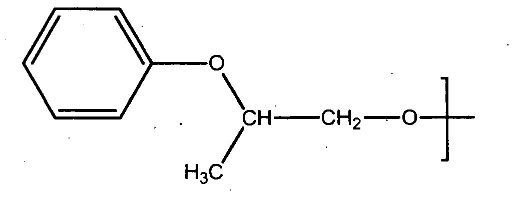
- un groupe t-butyléther de formule suivante : 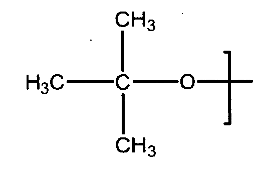
- un groupe allyléther de formule suivante : 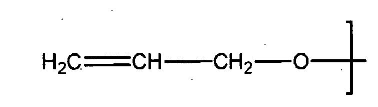
- un groupe p-méthoxybenzyléther de formule suivante : 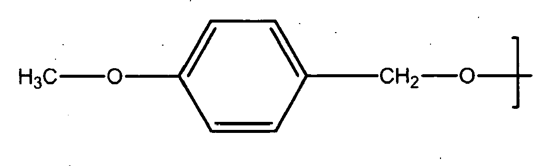
- un groupe p-halogénobenzyléther de formule suivante : 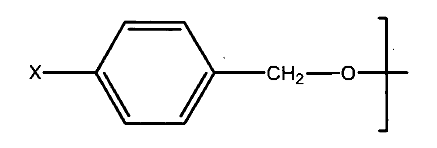 dans laquelle X représente un atome d'halogène ;
- un groupe triphénylméthyléther de formule suivante : 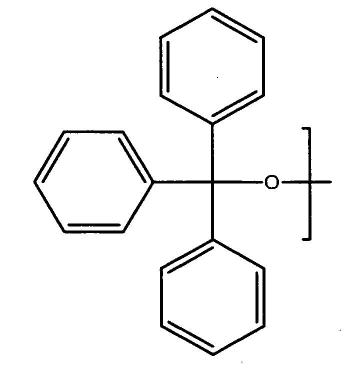
- un groupe triisopropylsilyléther de formule suivant : 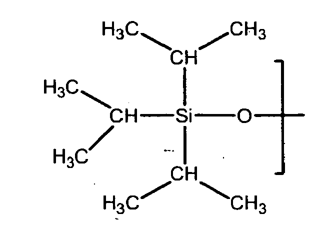
- un groupe diméthylisopropylsilyléther de formule suivante : 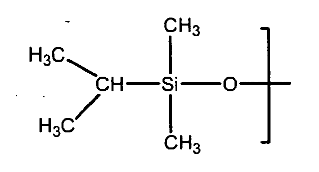
- un groupe diéthylisopropylsilyléther ;
- un groupe méthoxyméthylcarbonate de formule suivante : 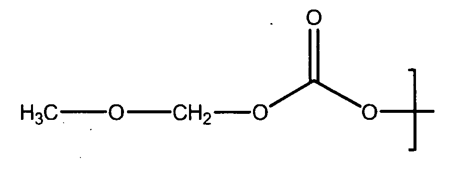 les traits de coupure indiquant l'endroit par lequel se fait la liaison avec le groupe E.

Selon l'invention, le groupe E est un groupe espaceur organique, sa fonction essentielle étant de conférer des propriétés particulières au film résultant du greffage des composés silanes à la surface d'un support.

Ce groupe E est généralement un groupe hydrocarboné, comprenant, par exemple, de 2 à 24 atomes de carbone, et comprenant éventuellement une ou plusieurs insaturations et/ou un ou plusieurs groupes aromatiques et/ou un ou plusieurs hétéroatomes.

A titres d'exemples, le groupe E peut être un groupe alkylène, c'est-à-dire un enchaînement du type -CH₂-, comprenant, par exemple, de 8 à 24 atomes de carbone. Ce type de groupe confère aux composés silanes, une fois greffés sur un support, une capacité à interagir entre eux, par création d'interactions interchaînes et ainsi contribue à l'obtention de monocouches organisées.

Le groupe E peut être un groupe fluoroalkylène comprenant de 3 à 24 atomes de carbone. Ces groupes contribuent à conférer au film résultant du greffage des composés silanes les comprenant, des propriétés permettant leur utilisation en chromatographie et en électrophorèse.

Le groupe E peut être un groupe hydrocarboné comprenant une ou plusieurs insaturations, par exemple, du type acétylénique. Un exemple d'un tel groupe peut être un groupe alkylène tel que défini ci-dessus interrompu par une ou plusieurs insaturations acétyléniques. Lorsque le groupe E comporte au moins deux insaturations, il peut conférer aux composés silanes, une fois greffés sur un support, une capacité à se réticuler.

Le groupe E peut être également un groupe hydrocarboné comprenant un ou plusieurs groupes aromatiques.

On peut citer, par exemple, un groupe E comprenant des groupes aromatiques conjugués avec des groupes linéaires insaturés, tel qu'un groupe résultant de l'enchaînement d'un motif phénylène-vinylène ou phénylène-acétylène. Ces groupes contribuent à conférer au film résultant du greffage des composés silanes les comprenant, des propriétés optiques non linéaires.

On peut citer, par exemple, un groupe E comprenant des motifs pyrrole, thiophène. Ces groupes contribuent à conférer au film résultant du greffage des composés silanes les comprenant, des propriétés de conduction électronique.

On peut citer, par exemple, un groupe E comprenant un ou plusieurs aromatiques substitués par un ou plusieurs groupes hétéroatomiques, tel qu'un groupe comprenant un enchaînement de motifs quinones ou de motifs diazoïques. Ces groupes contribuent à conférer au film résultant du greffage des composés silanes les comprenant, des propriétés de photo/électroluminescence.

Selon l'invention, X représente un groupe silylé permettant la fixation covalente du composé silane sur les fonctions hydroxyle ou hydrure d'un support, lequel support peut être, par exemple, un support solide en silicium, en ITO (oxyde d'indium et d'étain) ou en titane.
Ce groupe X peut être un groupe trihalogénosilane (tel qu'un groupe trifluorosilane, un groupe trichlorosilane) ; un groupe trihydrogénosilane SiH₃ ; un groupe trialcoxysilane -Si(OR)₃ avec R représentant un groupe alkyle saturé en C₁ à C₆, linéaire ou ramifié, un groupe phényle (tel qu'un groupe triméthoxysilane, un groupe triéthoxysilane, un groupe triisopropoxysilane) ; un groupe triaminoalcoxyamine -Si(NR¹R²)₃, avec les R¹ et R² représentant indépendamment un groupe alkyle saturé en C₁ à C₆, linéaire ou ramifié, un groupe phényle ; un groupe organométallique (tel qu'un groupe organomagnésien, un groupe organolithien) ; un groupe hydrolysable.

Des composés particuliers conformes à l'invention répondent aux formules (II), (III) et (IV) suivantes :

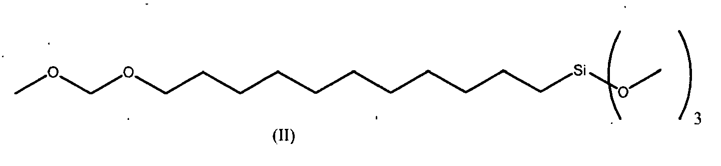

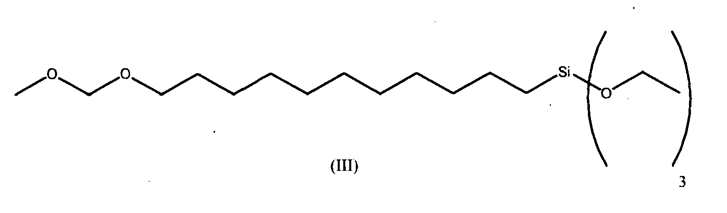

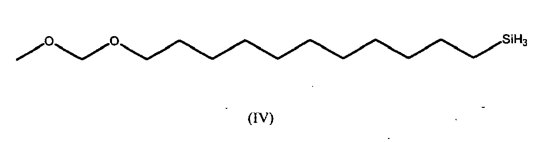

Les composés de l'invention peuvent être préparés par des méthodes classiques de synthèse accessibles à un technicien spécialisé en synthèse organique.

A titre d'exemple, les composés (II), (III) et (IV) peuvent être préparés selon le schéma réactionnel suivant :

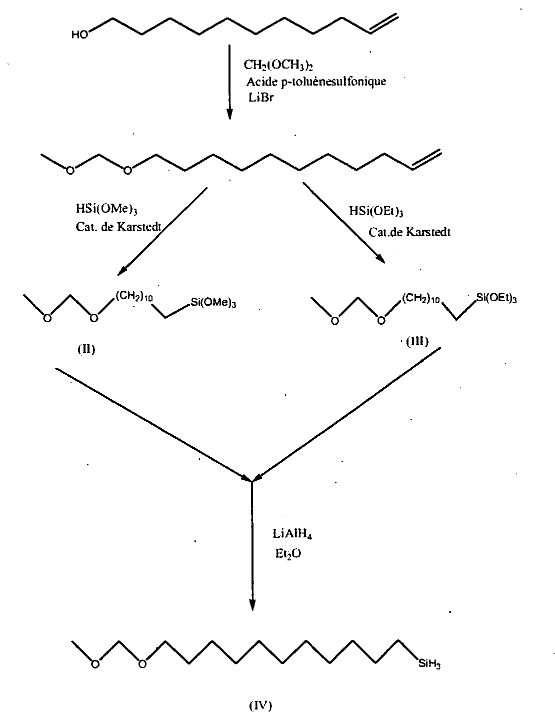

Dans ce cas de figure, la fonction méthoxyméthyléther est synthétisée par réaction de l'undécénol avec le diméthoxyméthane (assurant à la fois la fonction de réactif et de solvant) en présence de quantités catalytiques de bromure de lithium et d'acide paratoluènesulfonique. Enfin, l'introduction d'un groupe silylé s'effectue par une réaction d'hydrosilylation en présence d'un catalyseur de Karstedt de formule Pt[Si(CH₃)₂HC=CH₂]₂O.

L'homme du métier adaptera ce schéma réactionnel en fonction des composés silanes qu'il souhaite obtenir.

Comme mentionné précédemment, les composés silanes de l'invention sont susceptibles de se greffer à la surface d'un support, en raison de la présence du groupe X apte à réagir avec des fonctions hydroxyles ou hydrures (présentes sur le support) pour former des liaisons covalentes.

Ainsi, l'invention a trait selon un second objet, à un procédé de fonctionnalisation d'un support solide comportant en surface des fonctions hydroxyle ou hydrure, comprenant une étape de mise en contact d'une solution comprenant au moins un composé silane avec ledit support, ledit composé silane répondant à la formule (I) suivante :

A-E-X (I)

dans laquelle :
- X représente un groupe silylé apte à créer une liaison covalente après réaction avec les fonctions hydroxyle ou hydrure d'un support, lequel groupe X représente un groupe trihalogénosilane; un groupe trihydrogénosilane -SiH₃; un groupe trialcoxysilane -Si(OR)₃ avec R représentant un groupe alkyle saturé en C₁ à C₆, linéaire ou ramifié un groupe phényle; un groupe triaminoalcoxyamine -Si(NR¹R²)₃, avec les R¹ et R² représentant indépendamment un groupe alkyle saturé en C₁ à C₆, linéaire ou ramifié, un groupe phehyle, un groupe organométallique;
- E représente un groupe espaceur organique ;
- A représente un groupe apte à former une fonction -OH par hydrolyse acide, ladite fonction -OH après ladite hydrolyse étant liée de façon covalente à E,
ledit groupe A étant un groupe éther choisi parmi les groupes méthoxyméthyléther, t-butoxyméthyléther, 2-(triméthylsilyl)éthoxyméthyléther, tétrahydropyranyléther, 1-méthoxycyclohexyléther, 4-méthoxytétrahydropyranyléther, 4-méthoxytétrahydrothiopyranyléther, 4-méthoxytétrahydrothiopyranyléther S,S dioxyde, 1-[(2-chloro-4-méthyl)phényl]-4-méthoxypipéridin-4-yléther, 1-[(2-fluorophényl)phényl]-4-méthoxypipéridin-4-yléther, 1,4-dioxan-2-yléther, tétrahydrofuranyléther, 1-éthoxyéthyléther, 1-(2-chloroéthoxy)éthyléther, 1-méthyl-1-méthoxyéthyléther, 1-méthyl-1-benzyloéthyléther, t-butyléther, allyléther, p-méthoxybenzyléther, p-halogénobenzyléther, triphénylméthyléther, triisopropylsilyléther, diméthylisopropylsilyléther, diéthylisopropylsilyléther ou méthoxyméthylcarbonate.

X et E peuvent être définis précisément tels que dans la partie descriptive des composés silanes.

En particulier, X peut être un groupe trihalogénosilane (tel qu'un groupe trifluorosilane, un groupe trichlorosilane) ; un groupe trihydrogénosilane SiH₃; un groupe trialcoxysilane - Si(OR)₃ avec R représentant un groupe alkyle saturé en C₁ à C₆, linéaire ou ramifié, un groupe phényle (tel qu'un groupe triméthoxysilane, un groupe triéthoxysilane, un groupe triisopropoxysilane) ; un groupe triaminoalcoxyamine -Si(NR¹R²)₃, avec les R¹ et R² représentant indépendamment un groupe alkyle saturé en C₁ à C₆, linéaire ou ramifié, un groupe phényle ; un groupe organométallique (tel qu'un groupe organomagnésien; un groupe organolithien) ; un groupe hydrolysable.

Des composés de formules (II) à (IV) sont particulièrement appropriés pour la mise en oeuvre de ce procédé.

Ce procédé peut comprendre préalablement un étape de traitement de la surface de support afin de créer sur ladite surface les fonctions hydroxyles ou hydrures nécessaires au greffage.

Ainsi, pour un support en silicium du type 100 (par exemple, du type wafer), il est préférable, avant fonctionnalisation, de traiter celui-ci en le mettant en contact avec une solution de soude afin d'engendrer une réaction d'hydroxylation.

Les supports pouvant être fonctionnalisés selon le procédé de l'invention peuvent être des supports organiques (par exemple en matériaux plastiques), des supports inorganiques, par exemple des supports en oxyde métallique (par exemple, silice et ses dérivés comme le verre, le quartz, oxyde d'indium et d'étain...), des supports métalliques (tel que des supports en titane) ou des supports en silicium, l'essentiel étant que ces supports soient susceptibles (éventuellement avec l'étape de traitement préalable mentionnée ci-dessus) de présenter des fonctions hydroxyles ou hydrures pour le greffage des composés silanes de l'invention.

L'invention a également pour objet le support solide fonctionnalisé susceptible d'être obtenu par le procédé de l'invention.

La présente invention a donc également pour objet un procédé d'immobilisation de molécules biologiques sur support solide fonctionnalisé comprenant les étapes suivantes :
a) une étape de fonctionnalisation d'un support solide comportant en surface des fonctions hydroxyle ou hydrure, comprenant une étape de mise en contact avec ledit support d'une solution comprenant au moins un composé silane répondant à la formule (I) suivante :

   A-E-X (I)

   dans laquelle :
   - X représente un groupe silylé apte à créer une liaison covalente après réaction avec les fonctions hydroxyle ou hydrure d'un support, lequel groupe X représente un groupe trihalogénosilane; un groupe trihydrogénosilane -SiH₃; un groupe trialcoxysilane -Si(OR)₃ avec R représentant un groupe alkyle saturé en C₁ à C₆, linéaire ou ramifié un groupe phényle; un groupe triaminoalcoxyamine -Si(NR¹R²)₃, avec les R¹ et R² représentant indépendamment un groupe alkyle saturé en C₁ à C₆, linéaire ou ramifié, un groupe phehyle, un groupe organométallique;
   - E représente un groupe espaceur organique ;
   - A représente un groupe apte à former une fonction -OH par hydrolyse acide, ladite fonction -OH après ladite hydrolyse étant liée de façon covalente à E, comme defini à la page 6.
b) une étape de déprotection par hydrolyse acide des fonctions -OH des composés silanes greffés;
c) une étape de mise en contact du support obtenu à l'étape b) avec une solution comprenant la (les) molécule(s) biologique(s) à immobiliser, lesdites molécules biologiques comportant une extrémité apte à réagir avec les fonctions -OH des composés silanes greffés pour former une liaison covalente.

Selon une alternative, la(les) molécule (s) biologique(s) à immobiliser peuvent être greffés non pas directement sur la fonction -OH déprotégée du composé silane mais sur une fonction différente introduite par réaction d'un composé la comprenant sur la fonction -OH déprotégée du composé silane.

Dans ce cas, le procédé de l'invention comprend les étapes suivantes :
a) la préparation d'un support solide fonctionnalisé par la mise en oeuvre d'une étape de fonctionnalisation d'un support solide comportant en surface des fonctions hydroxyle ou hydrure, consistant en la mise en contact avec ledit support d'une solution comprenant au moins un composé silane répondant à la formule (I) suivante :

   A-E-X (I)

   dans laquelle :
   - X représente un groupe silylé apte à créer une liaison covalente après réaction avec les fonctions hydroxyle ou hydrure d'un support, lequel groupe X représente un groupe trihalogénosilane; un groupe trihydrogénosilane -SiH₃; un groupe trialcoxysilane -Si(OR)₃ avec R représentant un groupe alkyle saturé en C₁ à C₆, linéaire ou ramifié un groupe phényle; un groupe triaminoalcoxyamine -Si(NR¹R²)₃, avec les R¹ et R² représentant indépendamment un groupe alkyle saturé en C₁ à C₆, linéaire ou ramifié, un groupe phehyle, un groupe organométallique;
   - E représente un groupe espaceur organique ;
   - A représente un groupe apte à former une fonction -OH par hydrolyse acide, ladite fonction -OH après ladite hydrolyse étant liée de façon covalente à E, comme defini à la page.
b) une étape de déprotection par hydrolyse acide des fonctions -OH des composés silanes greffés;
c1) une étape de mise en contact du support obtenu en b) avec un composé apte à former une liaison covalente par réaction avec la fonction -OH des composés silanes et comprenant à l'issue de cette étape une extrémité réactive différente d'une fonction -OH ;
c2) une étape mise en contact du support obtenu à l'étape c1) avec une solution comprenant la (les) molécule(s) biologique(s) à immobiliser, lesdites molécules biologiques comportant une extrémité apte à réagir avec ladite extrémité réactive pour former une liaison covalente.

A, X et E peuvent être définis précisément tels que dans la partie descriptive des composés silanes.

En particulier, X peut être un groupe trihalogénosilane (tel qu'un groupe trifluorosilane, un groupe trichlorosilane) ; un groupe trihydrogénosilane SiH₃; un groupe trialcoxysilane - Si(OR)₃ avec R représentant un groupe alkyle saturé en C₁ à C₆, linéaire ou ramifié, un groupe phényle (tel qu'un groupe triméthoxysilane, un groupe triéthoxysilane, un groupe triisopropoxysilane) ; un groupe triaminoalcoxyamine -Si(NR¹R²)₃, avec les R¹ et R² représentant indépendamment un groupe alkyle saturé en C₁ à C₆, linéaire ou ramifié, un groupe phényle ; un groupe organométallique (tel qu'un groupe organomagnésien, un groupe organolithien) ; un groupe hydrolysable.

En particulier, A est un groupe éther choisi parmi les groupes méthoxyméthyléther, t-butoxyméthyléther, 2-(triméthylsilyl)éthoxyméthyléther, tétrahydropyranyléther, 1-méthoxycyclohexyléther, 4-méthoxytétrahydropyranyléther, 4-méthoxytétrahydrothiopyranyléther, 4-méthoxytétrahydrothiopyranyléther S,S dioxyde, 1-[(2-chloro-4-méthyl)phényl]-4-méthoxypipéridin-4-yléther, 1-[(2-fluorophényl)phényl]-4-méthoxypipéridin-4-yléther, 1,4-dioxan-2-yléther, tétrahydrofuranyléther, 1-éthoxyéthyléther, 1-(2-chloroéthoxy)éthyléther, 1-méthyl-1-méthoxyéthyléther, 1-méthyl-1-benzyloéthyléther, t-butyléther, allyléther, p-méthoxybenzyléther, p-halogénobenzyléther, triphénylméthyléther, triisopropylsilyléther, diméthylisopropylsilyléther, diéthylisopropylsilyléther ou méthoxyméthylcarbonate.

Des composés de formules (II) à (IV) sont particulièrement appropriés pour la mise en oeuvre de ce procédé.

L'étape de déprotection peut se faire en soumettant le support greffé à une solution acide, par exemple, une solution aqueuse d'acide chlorhydrique.

Ces supports fonctionnalisés, une fois les fonctions -OH déprotégées, permettent l'immobilisation reproductible de molécules biologiques d'intérêt tout en limitant l'adsorption non spécifique de molécules.

Ces supports fonctionnalisés peuvent en particulier être utilisés pour l'immobilisation, par fixation covalente, de molécules biologiques d'intérêt, telles que des acides nucléiques, des polypeptides (protéines, enzymes), des lipides, des carbohydrates ou des hormones.

Au sens de la présente invention et dans ce qui suit, on entend par « acides nucléiques » aussi bien des oligonucléotides que des ADN ou des ARN, ou encore des acides nucléiques au squelette ou aux bases modifiées, tels que les acides nucléiques peptidiques (correspondant à l'acronyme PNA pour « Peptide Nucleic Acids ») qui font intervenir des liaisons peptidiques à la place des liaisons phosphodiesters.

Ainsi, pour greffer un acide nucléique sur le support, il peut être envisageable de greffer sur les fonctions -OH des composés silanes un composé comprenant un groupe phosphate, lequel groupe sera susceptible de réagir avec un nucléotide pour former une liaison phosphodiester, les nucléotides subséquents réagissant l'un sur l'autre pour former le polynucléotide.

Un composé approprié comprenant un groupe phosphate est le phosphoramidite-Cy3, qui agit également en tant que marqueur fluorescent.

Une fois déprotégé, les composés silanes greffés présentent un caractère hydrophile. Ils peuvent aussi être utilisés pour assurer une fonction de rétention de composés hydrophiles, tels que les protéines.

L'invention a également pour objet les supports solides obtenus en mettant en oeuvre le procédé d'immobilisation conforme à l'invention, c'est-à-dire les supports solides sur lesquels sont immobilisés par fixation covalente les molécules biologiques d'intérêt. Ces supports solides peuvent ainsi être utilisés comme outils d'analyse (par exemple, pour un diagnostic, un séquençage) ou comme outils de synthèse pour réaliser par exemple des revêtements.

Les supports trouvent donc des applications dans de nombreux domaines, tels que la synthèse sur supports solides, la séparation et la purification de molécules (électrophorèse et chromatographie), les biocapteurs.

L'utilisation de supports solides fonctionnalisés selon la présente invention permet d'immobiliser différents types de molécules biologiques et donc de préparer différents types de puces comme des puces à acides nucléiques telles que des puces à ADN, des puces à polypeptides telles que des puces à protéines.

L'utilisation de supports solides modifiés selon la présente invention est particulièrement avantageuse pour la préparation de puces à ADN, à savoir de supports sur lesquels sont fixés, de façon covalente, des oligo- ou polynucléotides de séquences connues. De telles puces à ADN permettent, par hybridation des oligo- ou polynucléotides immobilisés sur le support avec des acides nucléiques ou des oligonucléotides cibles, de déterminer la séquence de ces molécules cibles et de suivre l'expression des gènes.

La présente invention a donc pour objet également une puce à acides nucléiques ou à polypeptides, obtenues par le procédé d'immobilisation de l'invention mentionné ci-dessus.

L'invention va maintenant être décrite par rapport aux exemples donnés ci-dessous à titre illustratif et non limitatif.

### BRÈVE DESCRIPTION DES DESSINS

La figure 1 illustre le spectre IR du 11-(méthoxyméthoxy)undécylsilane en solution (courbe a) dans le tricholoréthylène et après greffage (courbe b).
La figure 2 est un graphique illustrant l'évolution de l'angle de contact d'un support en silicium greffé en fonction du temps d'immersion dans une solution d'acide chlorhydrique 12N lors de la déprotection de la fonction méthoxyméthoxy.
La figure 3 illustre le spectre IR de la surface d'un support en silicium greffé par un composé silane de l'invention avant déprotection et après déprotection.

### EXPOSÉ DÉTAILLÉ DE MODES DE RÉALISATION PARTICULIERS

### EXEMPLE 1

Cet exemple illustre la synthèse d'un silane conforme à l'invention : le 11-(méthoxyméthoxy) undécylsilane selon le schéma réactionnel suivant :

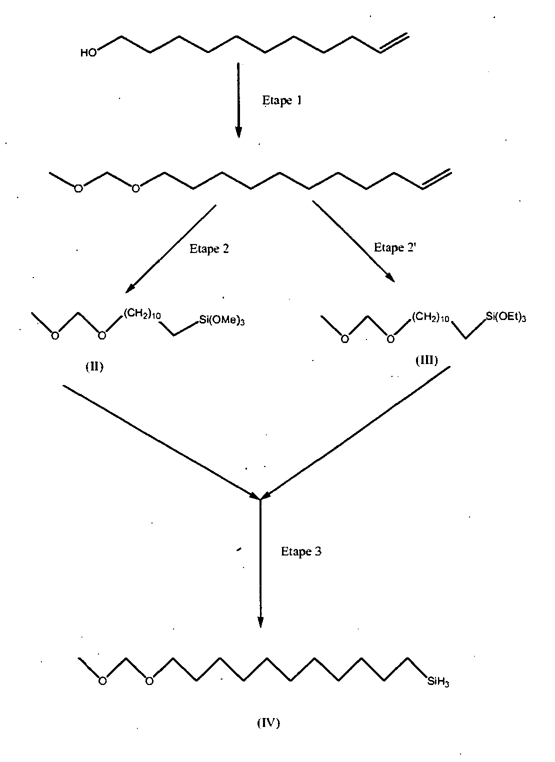

La fonction méthoxyméthyl éther est synthétisée par réaction de l'undécénol avec le diméthoxyméthane (réactif et solvant) en présence de quantités catalytiques de bromure de lithium et d'acide paratoluènesulfonique. L'incorporation du groupement silylé s'effectue par une réaction d'hydrosilylation en présence d'un catalyseur de Karstedt.

### a) Etape 1 : Synthèse du 11-(méthoxyméthoxy)undéc-1-ène

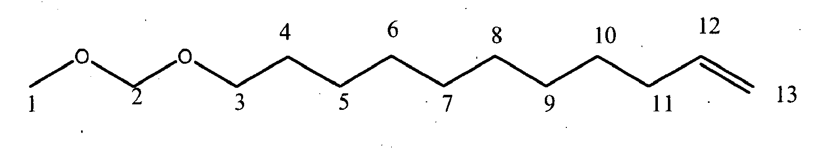

A une solution de undécénol (15g ; 17,65 mL ; 88 mmol) dissous dans 225 mL de diméthoxyméthane (12,9g ; 170 mmol ; 28,3 éq) sont additionnés du bromure de lithium (3,06g ; 35 mmol ; 0,4 éq) et de l'acide paratoluènesulfonique (1,67 g ; 8,8 mmol ; 0,1 éq). La réaction se déroule à température ambiante durant 12 heures. Après addition de 500 mL d'éther, le mélange réactionnel est lavé successivement avec de l'eau permutée (à deux reprises) et avec une solution saturée de chlorure de sodium, séché sur du sulfate de magnésium anhydre puis concentré. Le résidu est purifié par chromatographie sur colonne de gel de silice (pentane/éther : 97,5/12,5) pour donner un liquide jaunâtre.

Les caractéristiques du produit obtenu sont les suivantes :
Masse : 16,26 g
Rendement : 86%
**RMN ¹H (200 MHz, CDCl₃) .** 1,31 (12H ; m ; H⁵⁻¹⁰) ; 1,57 (2H ; m ; H⁴) ; 2,03 (2H ; m ; H¹¹) ; 3,37 (3H ; s ; H¹) ; 3,52 (2H; t; H³; ³J_{H-H}=6,6 Hz) ; 4, 62 (2H; s; H²) ; 4,96 (2H; m; H¹³) ; 5,82 (1H ; m ; H¹²)
**RMN ¹³C (200 MHz, CDCl₃):** 26, 59 ; 29, 30 ; 29, 49 ; 29,80 (2C) ; 29, 91 ; 30, 12 ; 34,18 (C¹¹) ; 55, 37 (C¹) ; 68,20 (C³) ; 96,74 (C²) ; 114, 47 (C¹³ ; 139,50 (C¹²)
**Spectrométrie de masse m/z (NBA) :** 154 [M+H]⁺-O-CH₂OCH₃

### b) Etape 2 : Synthèse du 11-(méthoxyméthoxy)undécyltriméthoxysilane (II)

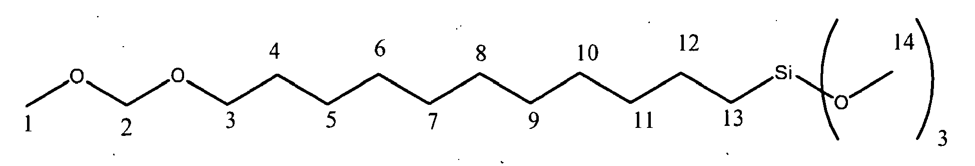

Le 11-(méthoxyméthoxy)undéc-1-ène (12,6 g ; 59 mmol) est mélangé avec du triméthoxysilane (95%) (9,65 g ; 10,1 mL ; 75 mmol ; 1,3 éq). Le catalyseur de Karstedt (0,14 g ; 0,15 mmol ; 0,0025 éq) est additionné très lentement. La réaction se déroule à température ambiante pendant 16 heures. Le brut réactionnel est purifié par distillation pour donner un liquide incolore (T_{ébullition} : 125-130°C à une pression de 0,5 mbar).

Les caractéristiques du produit obtenu sont les suivantes :
Masse : 14,08 g
Rendement 71%
**RMN ¹H (200 MHz, CDCl₃) :** 0,65 (2H ; m ; H¹³) ; 1,29 (16H ; m ; H⁵⁻¹²) ; 1,59 (2H ; m ; H^{4²}) ; 3,62 (3H ; s ; H¹) ; 3,52 (2H; t; H³; ³J_{H-H}=6,5 Hz); 3,58 (9H; s; H¹⁴) ; 4,62 (2H; s; H²)
**RMN ¹³C (200 MHz, CDCl₃) :** 9,44 (C¹³) ; 22, 92 ; 26, 55 ; 29,59; 29,78; 29, 83 ; 29,92 (2C); 30,07 ; 33,46 ; 50,75 (3C ; C¹⁴) ; 55,33 (C¹) ; 68,18 (C³) ; 96,68 (C²)
**RMN Si (200 MHz, CDCl₃) :** -41,31 (s)

### Etape 2' : Synthèse du 11-(méthoxyméthoxy)undécyltriéthoxysilane (III)

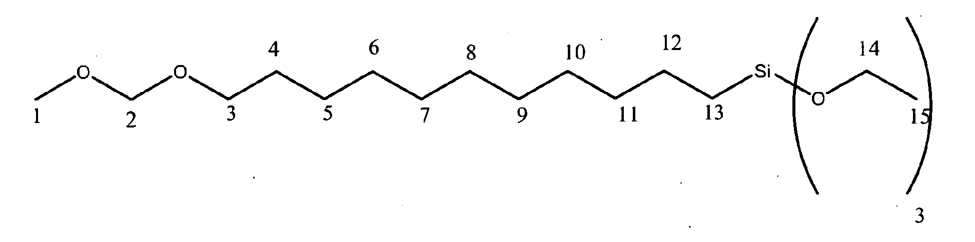

Le 11-(méthoxyméthoxy)undéc-1-ène (15,66 g ; 73 mmol) est mélangé avec du triéthoxysilane (97%) (19,94 g ; 22,4 mL ; 118 mmol ; 1,61 éq). Le catalyseur de Karstedt (0,18 g ; 0,19 mmol ; 0,0025 éq) est additionné très lentement. La réaction se déroule à température ambiante pendant 3 heures. Le brut réactionnel est purifié par distillation pour donner un liquide incolore (T_{ébullition} : 105-110°C à une pression de 10⁻² mbar).

Les caractéristiques du produit obtenu sont les suivantes :
Masse : 19,61 g
Rendement : 71%
**RMN ¹H (200 MHz, CDCl₃):** 0,64 (2H ; m ; H¹³) ; 1,24 (9H ; t ; H¹⁵ J_{H-H}= 7.0 Hz); 1,27 (16H ; m ; H⁵⁻¹²) ; 1,60 (2H ; m ; H⁴) ; 3,37 (3H; s; H¹) ; 3,53 (2H; t; H³ ; ³J_{H-H}=6,6 Hz) ; 3, 82 (6H; q; H¹⁴; ³J_{H-H}-7,0 Hz) ; 4, 63 (2H ; s ; H²)
**RMN ¹³C (200 MHz, CDCl₃) :** 10,78 (C¹³) ; 18,67 (3C ; ¹⁵C) ; 23; 14 ; 26,60; 29,63; 29, 83 ; 29,90; 29,98 (2C) ; 30, 14 ; 33, 57; 55, 42 (C¹) ; 58, 65 (3C ; C¹⁴) ; 68,26 (C³) ; 96, 77 (C²)
**RMN Si (200 MHz, CDCl₃) :** -44,27 (s)
**Spectrométrie de masse m/z (NBA) :** 379 [M+H]⁺

### Etape 3 Synthèse du 11-(méthoxyméthoxy)undécylsilane (IV)

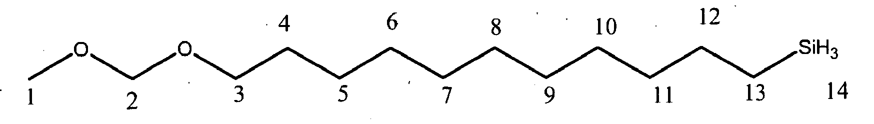

A une solution de LiAlH₄ (3,5g ; 92 mmol ; 2 éq.) dans 500 mL d'éther anhydre et refroidi à 0°C, est additionné lentement une solution de 11-(méthoxyméthoxy)undécyltriéthoxysilane (17,34 g ; 49 mmol) dissous dans 500 mL d'éther anhydre. La réaction se déroule à température ambiante et sous argon durant 48 heures. Le mélange réactionnel est filtré sur célite, puis concentré et repris au dichlorométhane. Ensuite, la phase organique est lavée successivement avec une solution d'acide chlorhydrique 1N (à deux reprises) et avec une solution saturée de chlorure de sodium, séchée sur du sulfate de magnésium anhydre, puis concentrée. Le résidu est purifié par distillation pour donner un liquide incolore (T_{ébullition} : 75-80°C à une pression de 10⁻² mbar).

Les caractéristiques du produit obtenu sont les suivantes :
Masse : 8,46 g
Rendement : 75%
**RMN ¹H (200 MHz, CDCl₃)** :0,75 (2H ; m ; H¹³) ; 1,24 (16H ; m; H⁵⁻¹²) ; 1,61 (2H ; m ; H⁴) ; 3,37 (3H ; s ; H¹) ; 3,50 (3H; t; H¹⁴ ; ³J_{H-H}=3,9 Hz); 3,54 (2H; t; H³ ; ³J_{H-H}-6.5 Hz); 4,64 (2H; s; H²)
**RMN ¹³C (200 MHz, CDCl₃)**: 6,30 (C¹³) ; 26,72 ; 26, 75 ; 29, 64; 29, 84; 29, 88 ; 29, 98 (2C) ; 30, 15 ; 32, 88 ; 55, 40 (¹C) ; 68,23 (C³) ; 96,76 (C²)
**RMN Si (200 MHz, CDCl₃)** : -58,96 (s)
**Spectrométrie de masse m/z (NBA)** : 245 [M+H]⁺

### Exemple 2

Cet exemple illustre la silanisation d'un support en silicium par le composé silane préparé dans l'exemple 1.

Préalablement, le support en silicium, recouvert d'une couche d'oxyde thermique de 5000 Å d'épaisseur, est soumis à une hydroxylation par mise en contact avec une solution de soude 3,5 M pendant deux heures.

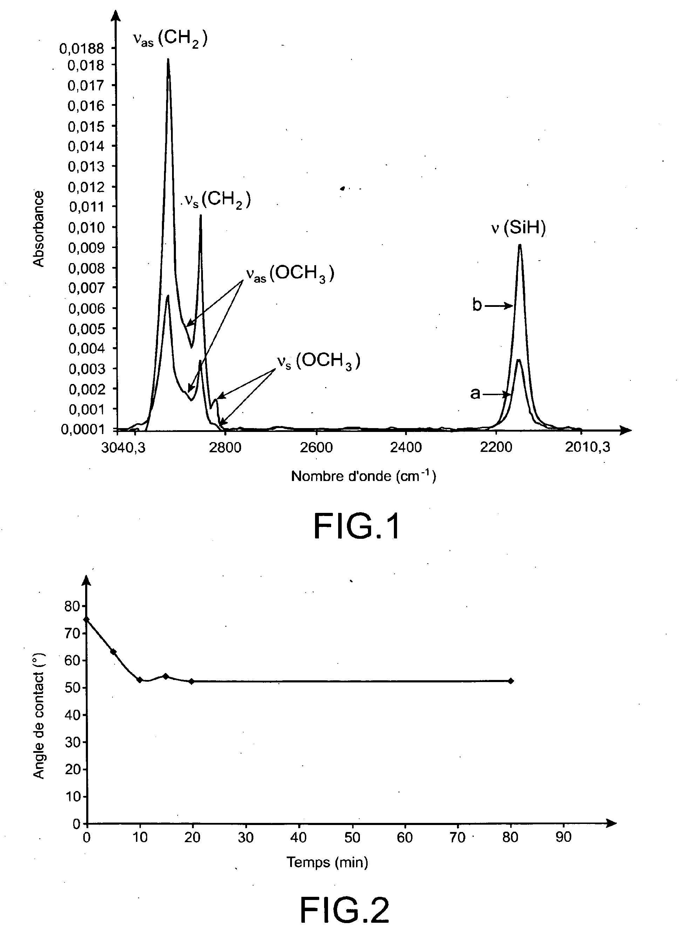

Une solution comprenant le composé silane de l'exemple 1 à une concentration de 10⁻²M, dans du trichloroéthylène anhydre est utilisée, et les réactions de silanisation sont effectuées à une température contrôlée de 2°C pendant 24 heures. La fonction méthoxyméthoxy est transformée en fonction OH lors d'une réaction de post-silanisation du support modifié par mise en contact avec une solution d'acide chlorhydrique 12N, tel que cela est illustré sur la figure 1.

La figure 1 représente le spectre infrarouge du 11-(méthoxyméthoxy)undécylsilane en solution dans le trichloroéthylène et le spectre de la surface du support en silicium après silanisation.

D'autres résultats expérimentaux figurent dans le tableau ci-dessous.

| | Composé de l'exemple 1 en solution dans le trichloroéthylène | Composé de l'exemple 1 greffé en surface du support |
|---|---|---|
| Angle de contact | - | 75°±2 |
| Rugosité (nm) | - | 0,18 |
| Ellipsométrie (nm, n=1,45) | - | 2,2±0,1 |
| ATR | | |
| vₐₛ (CH₂), cm⁻¹ | 2928 | 2926 |
| vₛ (CH₂), cm⁻¹ | 2855 | 2854 |
| vₐₛ(CH₃)_{CH2-O-CH3}, cm⁻¹ | 2885 | 2885 |
| vₛ (CH₃)_{CH2-O-CH3}, cm⁻¹ | 2822 | 2823 |
| v(SiH), cm⁻¹ | 2149 | 2150 |

Après silanisation, on observe en spectroscopie IR-ATR les bandes caractéristiques de l'hydrogénosilane de l'exemple 1 monofixé. La surface du support ainsi modifié est relativement hydrophobe (angle de contact de 75°) et la monocouche obtenue d'une épaisseur de 2,2 nm est homogène (rugosité de 0,18 nm).

### EXEMPLE 3

Cet exemple illustre la déprotection de la fonction -OH du composé greffé à la surface du support, le suivi de cette réaction de déprotection étant réalisé soit par l'étude de l'évolution de l'angle de contact soit par spectroscopie IR par tranformée de Fourier ATR (FTIR-ATR).

### a) Etude de l'évolution de l'angle de contact

Un suivi par angle de contact a été réalisé afin de démontrer la rapidité et l'efficacité du traitement de déprotection.

Pour cela, le support en silicium fonctionnalisé par le composé silane porteur d'un groupe méthoxyméthoxy en extrémité de chaîne est plongé dans une solution d'HCl 12N. Après un rinçage à l'eau désionisée et au pentane sous ultrasons pendant quatre minutes, l'angle de contact est mesuré.

La figure 2 illustre l'évolution de l'angle de contact en fonction du temps de contact du support avec la solution d'HCl.

Le tableau ci-dessous présente les résultats suivants.

| Temps de contact (en min) | Angle de contact (°) |
|---|---|
| 0 | 75,1 |
| 5 | 63 |
| 10 | 52,9 |
| 15 | 54,1 |
| 20 | 52,2 |
| 80 | 52,1 |

Ces résultats montrent que la réaction de la solution d'acide chlorhydrique sur la surface entraîne une baisse de l'angle de contact d'environ 75° à environ 52°, ce qui confirme le remplacement de la fonction méthoxyméthoxy par une fonction -OH beaucoup plus hydrophile. Par ailleurs, il a été constaté que la réaction de déprotection est rapide. Après 5 minutes de réaction, la valeur a déjà baissé de 10° et au bout de 10 minutes de réaction, la surface est totalement déprotégée. Il est important de remarquer également que l'angle ne varie sensiblement plus, même après immersion pendant une longue durée dans cette solution agressive, ce qui atteste de la stabilité de la monocouche déposée.

### b) Suivi de la réaction de déprotection par FTIR-ATR

Afin de confirmer les résultats obtenus dans le paragraphe précédent, un suivi par FTIR-ATR de la réaction de déprotection a été réalisé.

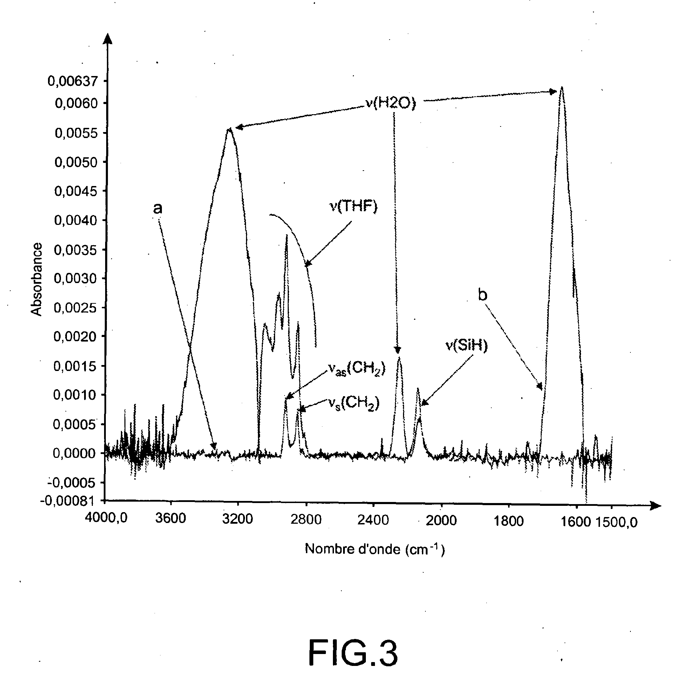

La figure 3 illustre le spectre FTIR-ATR de :
- la surface du support greffé par le composé silane non déprotégé après les lavages successifs avec de l'eau, du THF et le trichloroéthylène (courbe a) ;
- la surface du support greffé par le composé silane déprotégé après traitement par la solution HCl 12N pendant 15 minutes et les lavages successifs avec de l'eau, du THF et le trichloroéthylène (courbe b).

Sur la courbe a, il peut être constaté qu'il ne reste aucune trace des bandes caractéristiques d'eau et de .THF (composés hydrophiles). Cette observation est tout à fait en accord avec la présence à la surface de la fonction méthoxyméthoxy hydrophobe, qui ne favorise pas la physisorption de ces solvants protiques. L'apparition minime des bandes νₐ (CH₂), νₐₛ (CH₂), νₐₛ (SiH) peut s'expliquer par une légère réorganisation des chaînes à la surface.

Par contre, une fois le traitement avec la solution HCl 12N effectué, on peut observer, sur la courbe b, l'apparition de bandes caractéristiques de l'eau et du THF, ce qui atteste d'une physisorption des ces solvants à la surface du support. Le changement de comportement de ces solvants protiques vis-à-vis de la surface du support après traitement nous montre que la déprotection des fonctions méthoxyméthoxy (fonctions hydrophobes) en fonctions -OH (fonctions hydrophiles) a bien eu lieu.

### C) Autres analyses

D'autres mesures ont été effectuées (angle de contact, rugosité, épaisseur) et figurent dans le tableau ci-dessous.

| | Composé de l'exemple 1 greffé sur le support | Composé de l'exemple 1 greffé en surface et déprotégé |
|---|---|---|
| Angle de contact | 75°±2 | 52°±2 |
| Rugosité (nm) | 0,18 | 0,2 |
| Ellipsométrie (nm, n=1,45) | 2,2±0,1 | 1,8±0,1 |
| ATR* | | |
| νₐₛ (CH₂), cm⁻¹ | 2926 | 2926 |
| νₛ (CH₂), cm⁻¹ | 2854 | 2854 |
| νₐₛ (CH₃)_{CH2-O-CH3}, cm⁻¹ | 2885 | - |
| νₛ (CH₃)_{CH2-O-CH3}, cm⁻¹ | 2823 | - |
| ν (SiH), cm⁻¹ | 2150 | 2150 |

Les analyses reportées ci-dessus indiquent que des rugosités de surface très faibles sont obtenues après la réaction de déprotection.

Enfin, d'après les analyses effectuées en ellipsométrie en prenant l'indice de réfraction de 1,45, il est observé une légère diminution de l'épaisseur du film organique en surface de 2,2 à 1,8 nm, après l'étape de déprotection, ce qui s'explique par la transformation du groupe méthoxyméthoxy en groupe -OH.

### EXEMPLE 4

Cet exemple illustre une réaction de couplage d'un composé fluorophore avec le composé silane déprotégé greffé sur le support en silicium, préparé conformément à l'exemple 3.

Le composé fluorophore est le Cy3 phosphoramidite et répond à la formule suivante :

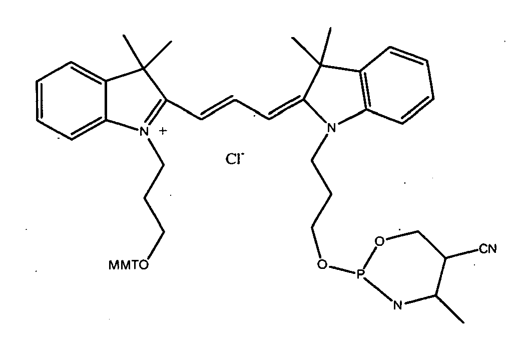

La réaction de couplage est réalisée dans l'acétonitrile, avec du tétrazole, à température ambiante pendant 10 minutes. Cette réaction de couplage est suivie d'une étape dite de « capping » en présence d'anhydride acétique et de N-méthylimidazole, pour bloquer les groupes -OH n'ayant pas réagi. Le composé phosphite obtenu par réaction avec le Cy3 phosphoramidite est ensuite oxydé, pour transformer le groupe phosphite en groupe phosphate et enfin une étape de détritylation est effectuée pour permettre au composé fluorophore d'être visible avec le scanner GenePix® de la société Axon.

Il apparaît sur l'image prise par le scanner que le composé fluorophore a bien été greffé sur le support par les biais des groupes -OH portés par les composés silanes greffés.

### EXEMPLE 5

Cet exemple illustre la synthèse d'un oligonucléotide comprenant 20 bases à partir d'un support greffé par des composés silanes conformes à l'invention.

La fabrication de l'oligonucléotide est réalisée sur un synthétiseur EXPEDITE® de chez Perkin Elmer suivant 20 cycles de synthèse et sur le support réalisé à l'exemple 4. A la fin des cycles, les bases exocycliques des nucléotides sont déprotégées par un traitement ammoniacal (solution NH₄OH 40%) à 55°C pendant 30 minutes, qui permet également l'hydrolyse de la fonction cyanoéthoxyphosphate provenant du fluorophore Cy3 phosphoramidite. Ensuite, le support est mis en contact avec une solution comprenant un oligonucléotide complémentaire de celui synthéthisé conformément au mode opératoire décrit ci-dessus et comprenant le fluorophore Cy3 phosphoramidite à raison de 0,2 µM dans un tampon citrate salin de sodium, pendant 1 heure à 40°C.

Les résultats de mesure de fluorescence montrent que les supports modifiés conformément à l'invention permettent la synthèse in-situ d'un oligonucléotide.

### EXEMPLE 6

Cet exemple illustre les propriétés de rétention de protéines par un support modifié conformément à l'invention (support de l'exemple 3).

Un tissu biologique, par exemple, de nature cancéreuse, est apposé sur le support modifié pendant 30 secondes puis après rinçage et dépôt de la matrice, l'analyse par spectrométrie de masse (obtenue par un appareil Seldi-Toff vendu sous la dénomination ProteinChip® System Series 4000 par la société Ciphergen) est réalisée directement sur la surface.

Le spectre obtenu montre la présence de pics que l'on peut affecter à des protéines présentant des affinités hydrophiles.

## Revendications

1. Composé silane répondant à la formule (I) suivante :
A-E-X (I)
dans laquelle :
- X représente un groupe silylé apte à créer une liaison covalente après réaction avec les fonctions hydroxyle ou hydrure d'un support, lequel groupe X représente un groupe trihalogénosilane ; un groupe trihydrogénosilane -SiH₃; un groupe trialcoxysilane -Si(OR)₃ avec R représentant un groupe alkyle saturé en C₁ à C₆, linéaire ou ramifié, un groupe phényle; un groupe triaminoalcoxyamine -Si(NR¹R²)₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe apte à former une fonction -OH par hydrolyse acide, ladite fonction -OH après ladite hydrolyse étant liée de façon covalente à E,
ledit groupe A étant un groupe éther choisi parmi les groupes méthoxyméthyléther, t-butoxyméthyléther, 2-(triméthylsilyl)éthoxyméthyléther, tétrahydropyranyléther, 1-méthoxycyclohexyléther, 4-méthoxytétrahydropyranyléther, 4-méthoxytétrahydrothiopyranyléther, 4-méthoxytétrahydrothiopyranyléther S,S dioxyde, 1-[(2-chloro-4-méthyl)phényl]-4-méthoxypipéridin-4-yléther, 1-[(2-fluorophényl)phényl]-4-méthoxypipéridin-4-yléther, 1,4-dioxan-2-yléther, tétrahydrofuranyléther, 1-éthoxyéthyléther, 1-(2-chloroéthoxy)éthyléther, 1-méthyl-1-méthoxyéthyléther, 1-méthyl-1-benzyloéthyléther, t-butyléther, allyléther, p-méthoxybenzyléther, p-halogénobenzyléther, triphénylméthyléthèr, triisopropylsilyléther, diméthylisopropylsilyléther, diéthylisopropylsilyléther ou méthoxyméthylcarbonate.

2. Composé selon la revendication 1, dans lequel E représente un groupe hydrocarboné, comprenant éventuellement une ou plusieurs insaturations et/ou un ou plusieurs groupes aromatiques et/ou un ou plusieurs hétéroatomes.

3. Composé selon la revendication 2, dans lequel le groupe hydrocarboné comprend de 2 à 24 atomes atomes de carbone.

4. Composé selon la revendication 3, dans lequel le groupe hydrocarboné est un groupe alkylène comprenant de 8 à 24 atomes de carbone.

5. Composé de formule (II) suivante :

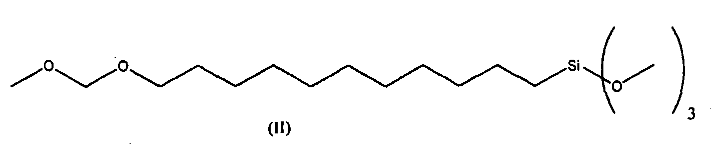

6. Composé de formule (III) suivante :

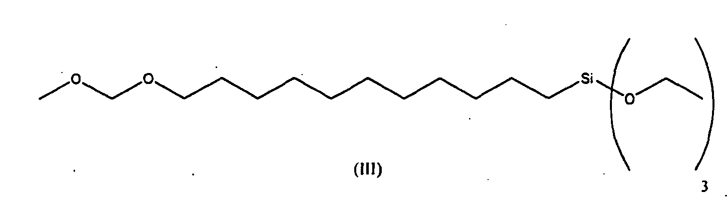

7. Composé de formule (IV) suivante :

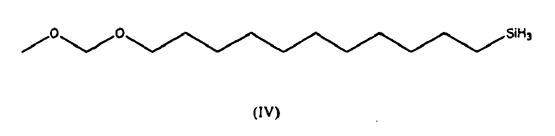

8. Procédé de fonctionnalisation d'un support solide comportant en surface des fonctions hydroxyle ou hydrure, ledit procédé comprenant une étape de mise en contact avec ledit support d'une solution comprenant au moins un composé silane tel que défini selon l'une quelconque des revendications 1 à 7.

9. Procédé selon la revendication 8, comprenant, avant l'étape de mise en contact, un étape de traitement de la surface du support afin de créer sur ladite surface les fonctions hydroxyles ou hydrures nécessaires au greffage.

10. Procédé selon la revendication 8 ou 9, dans lequel le support solide est un support organique ou un support inorganique.

11. Procédé selon la revendication 10, dans lequel le support inorganique est en en oxyde métallique, en métal ou en silicium.

12. Support solide susceptible d'être obtenu par le procédé tel que défini selon l'une quelconque des revendications 8 à 11.

13. Procédé d'immobilisation de molécules biologiques sur un support solide comprenant successivement :
a) une étape de fonctionnalisation d'un support solide comportant en surface des fonctions hydroxyle ou hydrure consistant en la mise en contact avec ledit support d'une solution comprenant au moins un composé silane répondant à la formule (I) suivante :
A-E-X (I)
dans laquelle :
- X représente un groupe silylé apte à créer une liaison covalente après réaction avec les fonctions hydroxyle ou hydrure d'un support, lequel groupe X représente un groupe trihalogénosilane ; un groupe trihydrogénosilane -SiH₃; un groupe trialcoxysilane -Si(OR)₃ avec R représentant un groupe alkyle saturé en C₁ à C₆, linéaire ou ramifié, un groupe phényle; un groupe triaminoalcoxyamine -Si(NR¹R²)₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe apte à former une fonction -OH par hydrolyse acide, ladite fonction -OH après ladite hydrolyse étant liée de façon covalente à E ;
b) une étape de déprotection des fonctions - OH des composés silanes greffés par hydrolyse acide ;
c) une étape de mise en contact du support obtenu à l'étape b) avec une solution comprenant la (les) molécule(s) biologique(s) à immobiliser, lesdites molécules biologiques comportant une extrémité apte à réagir avec les fonctions -OH des composés silanes greffés pour former une liaison covalente.

14. Procédé d'immobilisation de molécules biologiques sur un support solide comprenant successivement :
a) la préparation d'un support solide fonctionnalisé par la mise en oeuvre d'une étape de fonctionnalisation d'un support solide comportant en surface des fonctions hydroxyle ou hydrure consistant en la mise en contact avec ledit support d'une solution comprenant au moins un composé silane, ledit composé silane répondant à la formule (I) suivante :
A-E-X (I)
dans laquelle :
- X représente un groupe silylé apte à créer une liaison covalente après réaction avec les fonctions hydroxyle ou hydrure d'un support, lequel groupe X représente un groupe trihalogénosilane ; un groupe trihydrogénosilane -SiH₃; un groupe trialcoxysilane -Si(OR)₃ avec R représentant un groupe alkyle saturé en C₁ à C₆, linéaire ou ramifié, un groupe phényle; un groupe triaminoalcoxyamine -Si(NR¹R²)₃, avec les R¹ et R² représentant indépendamment un groupe alkyle saturé en C₁ à C₆, linéaire ou ramifié, un groupe phényle, un groupe organométallique ;
- E représente un groupe espaceur organique ;
- A représente un groupe apte à former une fonction -OH par hydrolyse acide, ladite fonction -OH après ladite hydrolyse étant liée de façon covalente à E ;
b) une étape de déprotection des fonctions - OH des composés silanes greffés par hydrolyse acide ;
c1) une étape de mise en contact du support obtenu en b) avec un composé apte à former une liaison covalente par réaction avec la fonction -OH des composés silanes et comprenant à l'issue de cette étape une extrémité réactive différente d'une fonction -OH ;
c2) une étape de mise en contact du support obtenu à l'étape c1) avec une solution comprenant la (les) molécule(s) biologique(s) à immobiliser, lesdites molécules biologiques comportant une extrémité apte à réagir avec ladite extrémité réactive pour former une liaison covalente.

15. Procédé d'immobilisation selon la revendication 13 ou 14, dans lequel la molécule biologique à immobiliser est choisie parmi les acides nucléiques, les polypeptides, les lipides, les carbohydrates ou les hormones.

16. Support solide susceptible d'être obtenu par un procédé tel que défini selon l'une quelconque des revendications 13 à 15.

17. Support solide selon la revendication 16, dans lequel les molécules biologiques immobilisées sont des acides nucléiques ou des polypeptides et qu'il constitue une puce à acides nucléiques ou à polypeptides.

## Claims

1. Silane compound corresponding to the following formula (I):
A-E-X (I)
in which:
- X represents a silylated group capable of creating a covalent bond after reaction with the hydroxyl or hydride functional groups of a support, said group X representing a trihalosilane group; a trihydrosilane -SiH₃ group; a trialkoxysilane -Si(OR)₃ group with R representing a saturated, linear or branched, C₁ to C₆ alkyl group or a phenyl group; a triaminoalkoxyamine -Si(NR¹R²)₃ group with R¹ and R² independently representing a saturated, linear or branched, C₁ to C₆ alkyl group or a phenyl group; an organometallic group;
- E represents an organic spacer group;
- A represents a group capable of forming an -OH functional group by acid hydrolysis, the said -OH functional group, after the said hydrolysis, being covalently bonded to E,
the said group A being an ether group chosen from methoxymethyl ether, t-butoxymethyl ether, 2-(trimethylsilyl)ethoxymethyl ether, tetrahydropyranyl ether, 1-methoxycyclohexyl ether, 4-methoxytetrahydropyranyl ether, 4-methoxytetrahydrothiopyranyl ether, 4-methoxytetrahydrothiopyranyl S,S-diaxide ether, 1-[(2-chloro-4-methyl)-phenyl]-4-methoxypiperidin-4-yl ether, 1-C(2-fluorophenyl)phenyl]-4-methoxypiperidin-4-yl ether, 1,4-dioxan-2-yl ether, tetrahydrofuranyl ether, 1-ethoxyethyl ether, 1-(2-chloroethoxy)ethyl ether, 1-methyl-1-methoxyethyl ether, 1-methyl-1-benzyloethyl ether, t-butyl ether, allyl ether, p-methoxybenzyl ether, p-halobenzyl ether, triphenylmethyl ether, triisopropylsilyl ether, dimethylisopropylsilyl ether, diethylisopropylsilyl ether or methoxymethyl carbonate groups.

2. Compound according to Claim 1, in which E represents a hydrocarbon group optionally comprising one or more unsaturations and/or one or more aromatic groups and/or one or more heteroatoms.

3. Compound according to Claim 2, in which the hydrocarbon group comprises from 2 to 24 carbon atoms.

4. Compound according to Claim 3, in which the hydrocarbon group is an alkylene group comprising from 8 to 24 carbon atoms.

5. Compound of following formula (II):

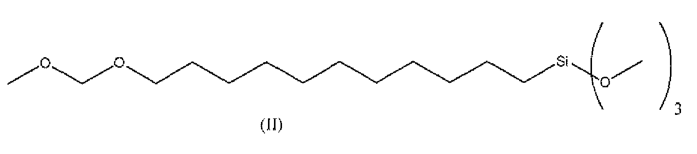

6. Compound of following formula (III):

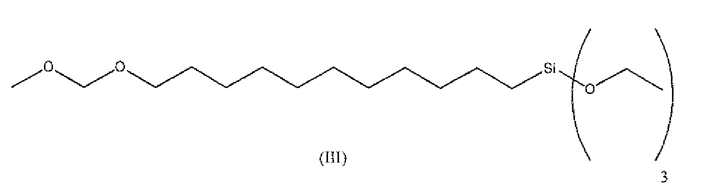

7. Compound of following formula (IV):

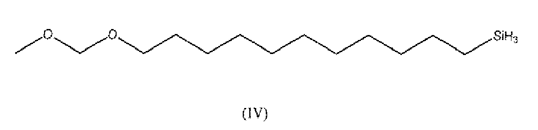

8. Process for the functionalization of a solid support comprising hydroxyl or hydride functional groups at the surface, the said process comprising a stage in which a solution comprising at least one silane compound as defined according to any one of Claims 1 to 7 is brought into contact with the said support.

9. Process according to Claim 8, comprising, before the contacting stage, a stage of treatment of the surface of the support in order to create, on the said surface, the hydroxyl or hydride functional groups necessary for the grafting.

10. Process according to Claim 8 or 9, in which the solid support is an organic support or an inorganic support.

11. Process according to Claim 10, in which the inorganic support is made of metal oxide, of metal or of silicon.

12. Solid support capable of being obtained by the process as defined according to any one of Claims 8 to 11.

13. Process for the immobilization of biological molecules on a solid support, successively comprising:
a) a stage of functionalization of a solid support comprising hydroxyl or hydride functional groups at the surface, which consists in bringing the said support into contact with a solution comprising at least one silane compound corresponding to the following formula (I) :
A-E-X (I)
in which:
- X represents a silylated group capable of creating a covalent bond after reaction with the hydroxyl or hydride functional groups of a support, said group X representing a trihalosilane group; a trihydrosilane -SiH₃ group; a trialkoxysilane -Si(OR)₃ group with R representing a saturated, linear or branched, C₁ to C₆ alkyl group or a phenyl group; a triaminoalkoxyamine -Si(NR¹R²)₃ group with R¹ and R² independently representing a saturated, linear or branched, C₁ to C₆ alkyl group or a phenyl group; an organometallic group;
- E represents an organic spacer group;
- A represents a group capable of forming an -OH functional group by acid hydrolysis, the said -OH functional group, after the said hydrolysis, being covalently bonded to E,
b) a stage of deprotection by acid hydrolysis of the -OH functional groups of the grafted silane compounds;
c) a stage in which the support obtained in stage b) is brought into contact with a solution comprising the biological molecule(s) to be immobilized, the said biological molecules comprising an end capable of reacting with the -OH functional groups of the grafted silane compounds to form a covalent bond.

14. Process for the immobilization of biological molecules on a solid support, successively comprising:
a) the preparation of a functionalized solid support by carrying out a stage of functionalization of a solid support comprising hydroxyl or hydride functional groups at the surface, which consists in bringing into contact with the said support a solution comprising at least one silane compound, the said silane compound corresponding to the following formula (I):
A-E-X (I)
in which:
- X represents a silylated group capable of creating a covalent bond after reaction with the hydroxyl or hydride functional groups of a support, said group X representing a trihalosilane group; a trihydrosilane -SiH₃ group; a trialkoxysilane -Si(OR)₃ group with R representing a saturated, linear or branched, C₁ to C₆ alkyl group or a phenyl group; a triaminoalkoxyamine -Si(NR¹R²)₃ group with R¹ and R² independently representing a saturated, linear or branched, C₁ to C₆ alkyl group or a phenyl group; an organometallic group;
- E represents an organic spacer group;
- A represents a group capable of forming an -OH functional group by acid hydrolysis, the said -OH functional group, after the said hydrolysis, being covalently bonded to E,
b) a stage of deprotection by acid hydrolysis of the -OH functional groups of the grafted silane compounds;
c1) a stage in which the support obtained in b) is brought into contact with a compound which is capable of forming a covalent bond by reaction with the -OH functional group of the silane compounds and which comprises, on conclusion of this stage, a reactive end other than an -OH functional group;
c2) a stage in which the support obtained in stage c1) is brought into contact with a solution comprising the biological molecule(s) to be immobilized, the said biological molecules comprising an end capable of reacting with the said reactive end to form a covalent bond.

15. Immobilization process according to Claim 13 or 14, in which the biological molecule to be immobilized is chosen from nucleic acids, polypeptides, lipids, carbohydrates or hormones.

16. Solid support capable of being obtained by a process as defined according to any one of Claims 13 to 15.

17. Solid support according to Claim 16, in which the immobilized biological molecules are nucleic acids or polypeptides and that it constitutes a nucleic acid or polypeptide chip.

## Patentansprüche

1. Silanverbindung nach der folgenden Formel (I):
A-E-X (I)
wobei:
- X für eine silylierte Gruppe steht, die dazu befähigt ist, infolge einer mit den funktionellen Hydroxyl- oder Hydridgruppen eines Trägers eine kovalente Bindung einzugehen, wobei X für eine Trihalogensilangruppe; für eine Trihydrogensilangruppe -SiH₃; für eine Trialkoxysilangruppe -Si(OR)₃, bei der R für eine gesättigte C₁- bis C₆-Alkylgruppe geradkettiger oder verzweigter Art, für eine Phenylgruppe steht; für eine Triaminoalkoxygruppe -Si(NR¹R²)₃, bei der R¹ und R² unabhängig voneinander für eine gesättigte C₁- bis C₆-Alkylgruppe geradkettiger oder verzweigter Art, für eine Phenylgruppe stehen; für eine Organometallgruppe steht;
- E für eine organische Abstandsgruppe steht;
- A für eine Gruppe steht, die dazu befähigt ist, durch saure Hydrolyse eine funktionelle OH-Gruppe zu bilden, wobei die funktionelle OH-Gruppe nach der Hydrolyse kovalent an E gebunden ist,
wobei die Gruppe A eine Ethergruppe ist, die aus den Gruppen Methoxymethylether, t-Butoxymethylether, 2-(Trimethylsilyl)ethoxymethylether, Tetrahydropyranylether, 1-Methoxycyclohexylether, 4-Methoxytetrahydropyranylether, 4-Methoxytetrahydrothiopyranylether, 4-Methoxytetrahydrothiopyranylethehr-S,S-dioxid, 1-[(2-Chlor-4-methyl)phenyl]-4-methoxypiperidin-4-ylether, 1-[(2-Fluorphenyl)phenyl]-4-methoxypiperidin-4-ylether, 1,4-Dioxan-2-ylether, Tetrahydrofuranylether, 1-Ethoxyethylether, 1-(2-Chlorethoxy)ethylether, 1-Methyl-1-methoxyethylether, 1-Methyl-1-benzylethylether, t-Butylether, Allylether, p-Methoxybenzylether, p-Halogenbenzylether, Triphenylmethylether, Triisopropylsilylether, Dimethylisopropylsilylether, Diethylisopropylsilylether oder Methoxymethylcarbonat gewählt ist.

2. Verbindung nach Anspruch 1, wobei E für eine Kohlenwasserstoffgruppe steht, die möglicherweise einfach oder mehrfach ungesättigt ist und/oder eine oder mehrere aromatische Gruppen und/oder ein oder mehrere Heteroatome umfasst.

3. Verbindung nach Anspruch 2, wobei die Kohlenwasserstoffgruppe 2 bis 24 Kohlenstoffatome umfasst.

4. Verbindung nach Anspruch 3, wobei die Kohlenwasserstoffgruppe eine Alkylengruppe ist, die 8 bis 24 Kohlenstoffatome umfasst.

5. Verbindung der folgenden Formel (II) :

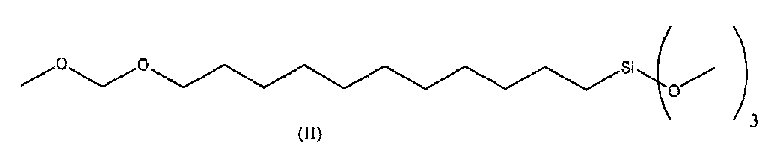

6. Verbindung der folgenden Formel (III):

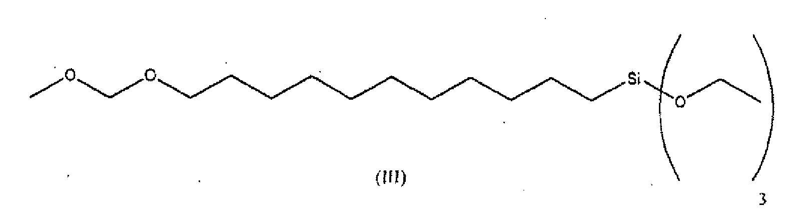

7. Verbindung der folgenden Formel (IV):

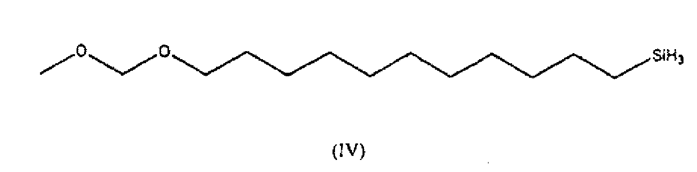

8. Verfahren zur Funktionalisierung eines feststofflichen Trägers, der an seiner Oberfläche funktionelle Hydroxyl- oder Hydridgruppen aufweist, wobei das Verfahren einen Schritt umfasst, in welchem eine Lösung, die mindestens eine Silanverbindung gemäß der Begriffsbestimmung in einem beliebigen der Ansprüche 1 bis 7 umfasst, mit dem Träger in Kontakt gebracht wird.

9. Verfahren nach Anspruch 8, das vor dem Schritt des Inkontaktbringens einen Schritt umfasst, in welchem die Oberfläche des Träger eine Behandlung erfährt, um auf der Oberfläche die Hydroxyl- oder Hydridgruppen zu schaffen, die für die Pfropfung erforderlich sind.

10. Verfahren nach Anspruch 8 oder 9, wobei es sich bei dem feststofflichen Träger um einen organischen Träger oder einen anorganischen Träger handelt.

11. Verfahren nach Anspruch 10, wobei der anorganische Träger aus Metalloxid, aus Metall oder aus Silizium besteht.

12. Feststofflicher Träger, der mittels des Verfahrens gemäß der Begriffsbestimmung in einem beliebigen der Ansprüche 8 bis 11 erhalten werden kann.

13. Verfahren zur Immobilisierung biologischer Moleküle auf einem feststofflichen Träger, nacheinander Folgendes umfassend:
a) einen Schritt der Funktionalisierung eines feststofflichen Trägers, der an seiner Oberfläche funktionelle Hydroxyl- oder Hydridgruppen aufweist, wobei dieser darin besteht, eine Lösung, die mindestens eine Silanverbindung umfasst, welche folgenden Formel (I) entspricht, mit dem Träger in Kontakt zu bringen:
A-E-X (I)
wobei:
- X für eine silylierte Gruppe steht, die dazu befähigt ist, infolge einer mit den funktionellen Hydroxyl- oder Hydridgruppen eines Trägers eine kovalente Bindung einzugehen, wobei X für eine Trihalogensilangruppe; für eine Trihydrogensilangruppe -SiH₃; für eine Trialkoxysilangruppe -Si(OR)₃, bei der R für eine gesättigte C₁- bis C₆-Alkylgruppe geradkettiger oder verzweigter Art, für eine Phenylgruppe steht; für eine Triaminoalkoxygruppe -Si(NR¹R²)₃, bei der R¹ und R² unabhängig voneinander für eine gesättigte C₁- bis C₆-Alkylgruppe geradkettiger oder verzweigter Art, für eine Phenylgruppe stehen; für eine Organometallgruppe steht;
- E für eine organische Abstandsgruppe steht;
- A für eine Gruppe steht, die dazu befähigt ist, durch saure Hydrolyse eine funktionelle OH-Gruppe zu bilden, wobei die funktionelle OH-Gruppe nach der Hydrolyse kovalent an E gebunden ist;
b) einen Schritt, in welchem die Schutzgruppen der funktionellen OH-Gruppen der aufgepfropften Silanverbindungen durch saure Hydrolyse entfernt werden;
c) einen Schritt, in welchem der Träger, der in Schritt b) erhalten wurde, mit einer Lösung in Kontakt gebracht wird, die das/die zu immobilisierende(n) biologische(n) Molekül(e) umfasst, wobei die biologischen Moleküle ein Ende aufweisen, das dazu befähigt ist, mit den OH-Gruppen der aufgepfropften Silanverbindungen zu reagieren, um eine kovalente Bindung zu bilden.

14. Verfahren zur Immobilisierung biologischer Moleküle auf einem feststofflichen Träger, nacheinander Folgendes umfassend:
a) die Herstellung eines funktionalisierten feststofflichen Trägers, indem ein Schritt der Funktionalisierung eines feststofflichen Trägers, der an seiner Oberfläche funktionelle Hydroxyl- oder Hydridgruppen aufweist, durchgeführt wird, wobei dieser darin besteht, eine Lösung, die mindestens eine Silanverbindung umfasst, mit dem Träger in Kontakt zu bringen, wobei die Silanverbindung der folgenden Formel (I) entspricht:
A-E-X (I)
wobei:
- X für eine silylierte Gruppe steht, die dazu befähigt ist, infolge einer mit den funktionellen Hydroxyl- oder Hydridgruppen eines Trägers eine kovalente Bindung einzugehen, wobei X für eine Trihalogensilangruppe; für eine Trihydrogensilangruppe -SiH₃; für eine Trialkoxysilangruppe -Si(OR)₃, bei der R für eine gesättigte C₁- bis C₆-Alkylgruppe geradkettiger oder verzweigter Art, für eine Phenylgruppe steht; für eine triaminoalkoxygruppe -Si(NR¹R²)₃, bei der R¹ und R² unabhängig voneinander für eine gesättigte C₁- bis C₆-Alkylgruppe geradkettiger oder verzweigter Art, für eine Phenylgruppe stehen; für eine Organometallgruppe steht;
- E für eine organische Abstandsgruppe steht;
- A für eine Gruppe steht, die dazu befähigt ist, durch saure Hydrolyse eine funktionelle OH-Gruppe zu bilden, wobei die funktionelle OH-Gruppe nach der Hydrolyse kovalent an E gebunden ist;
b) einen Schritt, in welchem die Schutzgruppen der funktionellen OH-Gruppen der aufgepfropften Silanverbindungen durch saure Hydrolyse entfernt werden;
c1) einen Schritt, in welchem der in b) erhaltene Träger mit einer Verbindung in Kontakt gebracht wird, welche dazu befähigt ist, durch Reaktion eine kovalente Bindung mit der funktionellen OH-Gruppe der Silanverbindungen zu bilden, und welche nach diesem Schritt ein reaktives Ende umfasst, das sich von einer funktionellen OH-Gruppe unterscheidet;
c2) einen Schritt, in welchem der in Schritt c1) erhaltene Träger mit einer Lösung in Kontakt gebracht wird, die das/die zu immobilisierende (n) biologische(n) Molekül (e) umfasst, wobei die biologischen Moleküle ein Ende aufweisen, das dazu befähigt ist, mit dem reaktiven Ende zu reagieren, um eine kovalente Bindung zu bilden.

15. Immobilisierungsverfahren nach Anspruch 13 oder 14, wobei das zu immobilisierende biologische Molekül aus den Nukleinsäuren, den Polypeptiden, den Lipiden, den Kohlenhydraten oder den Hormonen ausgewählt ist.

16. Feststofflicher Träger, der mittels eines Verfahrens gemäß der Begriffsbestimmung in einem beliebigen der Ansprüche 13 bis 15 erhalten werden kann.

17. Feststofflicher Träger nach Anspruch 16, wobei es sich bei den immobilisierten biologischen Molekülen zum Nukleinsäuren oder um Polypeptide handelt und dass er einen Chip mit Nukleinsäure oder mit Polypeptiden bildet.
